# FASCICULE DE BREVET EUROPEEN

(11) **EP 3 046 780 B1**
(45) Date de publication et mention de la délivrance du brevet: **31.03.2021**
(21) Numéro de dépôt: 14784313.0
(22) Date de dépôt: 19.09.2014
(51) Int. Cl.: B60B 35/10, B62D 7/15, B62D 9/00

(54) **ENSEMBLE COMPRENANT UN CHÂSSIS POUR ENGIN À VOIE VARIABLE TEL QU'UN ENGIN AGRICOLE DU TYPE PULVÉRISATEUR OU ENGIN ENJAMBEUR**
ANORDNUNG MIT EINEM FAHRGESTELL FÜR EIN FAHRZEUG MIT VARIABLER SPUR, Z. B. EIN LANDWIRTSCHAFTLICHES FAHRZEUG WIE EINEN SPRÜHER ODER EIN HOHES REINIGUNGSFAHRZEUG
ASSEMBLY INCLUDING A CHASSIS FOR A VARIABLE-TRACK VEHICLE SUCH AS AN AGRICULTURAL VEHICLE FOR INSTANCE A SPRAYER OR A HIGH-CLEARANCE VEHICLE

(30) Priorité: 20.09.2013 FR 1359082
(43) Date de publication de la demande: 27.07.2016
(73) Titulaire: Exel Industries, 75009 Paris (FR)
(72) Inventeur: BALLU, Cyril, F-45650 Saint Jean le Blanc (FR)
(74) Mandataire: Ahner, Philippe
(86) Numéro de dépôt international: PCT/FR2014/052335
(87) Numéro de publication internationale: WO 2015/040337

(56) Documents cités:
- WO-A1-2005/068278
- WO-A1-2013/133089
- JP-A- 2007 022 158
- US-A- 3 064 993
- US-A- 4 109 747
- US-A- 4 263 979
- US-A1- 2004 129 491
- US-A1- 2008 264 712

## Description

La présente invention se rapporte à un ensemble comprenant un châssis pour engin mobile terrestre à voie variable tel qu'un engin agricole du type pulvérisateur ou engin enjambeur.

Dans la présente description, on entend par engin mobile terrestre tout engin motorisé ou tracté se déplaçant sur le sol. L'expression « à voie variable » désigne quant à elle tout engin équipé d'un dispositif adapté pour modifier la distance entre deux roues d'un même essieu.

Un tel engin comprend classiquement un châssis reposant sur un essieu avant et un essieu arrière, chaque essieu recevant à ses extrémités une fusée sur laquelle est en prise le moyeu d'une roue. Un essieu peut être uniquement porteur ou moteur.

Généralement, le déplacement d'un véhicule est réalisé par la rotation d'au moins un essieu, entraîné en rotation directement ou indirectement par un arbre de sortie d'un moteur, par exemple thermique ou électrique. La direction de déplacement est quant à elle commandée par un dispositif de commande de direction agissant sur les roues avant et/ ou arrières.

Dans le cas de roues avant directrices, chaque roue avant est solidaire d'un porte-fusée lui-même solidaire d'une biellette de direction mobile en rotation autour d'un axe sensiblement vertical.

La mise en rotation des biellettes est commandée depuis la cabine de conduite par le conducteur qui agit sur un volant de direction.

Un dispositif de commande de direction connu de l'art antérieur comprend un volant solidaire d'une colonne de direction à l'extrémité de laquelle est monté un pignon engrenant sur une crémaillère, solidaire en chacune de ses extrémités des biellettes de direction.

On connaît également un dispositif de commande de direction selon lequel les biellettes de direction sont d'une part solidaires d'un porte-fusée supportant la roue, et d'autre part montées pivotantes en leur extrémité libre sur une tige de vérin double effet, hydraulique ou pneumatique, dont le déplacement de la tige du vérin est assuré par l'introduction d'un fluide ou d'un gaz d'un côté ou de l'autre du piston.

L'introduction du fluide dans le vérin est commandée depuis la cabine de conduite par la rotation du volant, en prise avec une pompe hydraulique et avec un système de vannes appropriées connu de l'homme du métier.

Cependant, quel que soit le mode de réalisation retenu du dispositif de commande de direction, lors d'un virage, les roues directrices du véhicule ne parcourent pas la même distance. Il est donc nécessaire que lors d'un virage, les roues directrices ne soient pas parallèles entre elles. Il faut pour cela prévoir un angle de rotation distinct pour la roue avant droite et pour la roue avant gauche, dans les cas où les roues directrices du véhicule sont les roues avant.

Lorsque cette condition n'est pas respectée, on aboutit à un phénomène de ripage des roues, qu'il convient d'éviter d'une part, pour ne pas entraver la sécurité des personnes à bord du véhicule (le ripage entraînant un glissement excessif des roues sur le sol) et, d'autre part, pour empêcher une usure excessive et prématurée des pneumatiques.

Pour éviter ce phénomène, le dimensionnement des différents organes constituant le dispositif de commande de direction est typiquement réalisé en se basant sur l'épure de Jeantaud (ou d'Ackermann), bien connue de l'homme du métier.

La figure 1 représente schématiquement un engin 1 comprenant un essieu avant 2 aux extrémités duquel sont montées deux roues avant 3_{G}, 3_{D} directrices, et un essieu arrière 5 aux extrémités duquel sont montées deux roues arrière 7_{G}, 7_{D}.

La figure 2 illustre l'épure de Jeantaud appliquée à l'engin représenté 1, en situation de virage.

La condition de non glissement est respectée lorsque, en virage, les lignes de contact au sol des quatre roues sont tangentes au cercle défini par le virage.

Autrement dit, la condition de non glissement est respectée lorsque les quatre roues ont un centre de rotation commun (fréquemment appelé « CIR » pour « centre instantané de rotation »), correspondant à un angle a d'ouverture entre les roues suffisant. Lorsque les roues avant sont les seules roues directrices, le centre de rotation commun se trouve donc nécessairement sur l'axe de l'essieu arrière.

Ainsi, tel que représenté, pour un virage à droite, l'épure de Jeantaud définit que la condition de non glissement est respectée lorsque la droite perpendiculaire (d_{D}) à la ligne de contact au sol de la roue avant droite 3_{D} et la droite perpendiculaire (d_{G}) à la ligne de contact au sol de la roue avant gauche 3_{G} se coupent sur la droite (d₅), droite joignant les deux points de contact au sol des roues arrières 7_{G} et 7_{D}. Le point d'intersection de ces deux droites est également appelé point de Jeantaud.

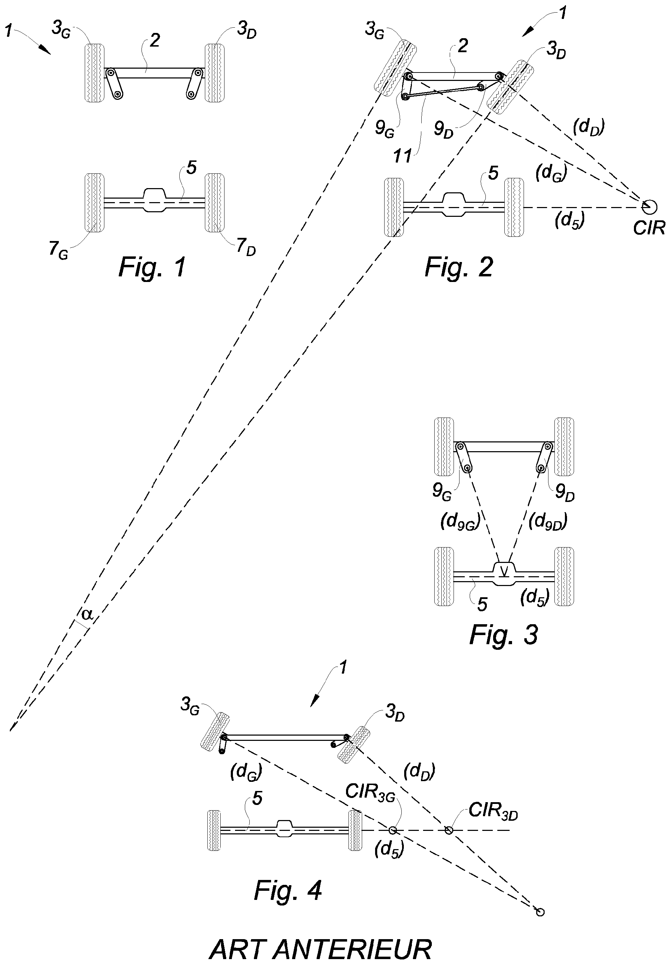

Le non-glissement en virage est obtenu grâce à un dimensionnement spécifique des biellettes de direction 9_{G}, 9_{D} et d'un bras de commande 11, représenté schématiquement sur la figure 2 pour une bonne compréhension du système. Pour cela, comme illustré sur la figure 3, le principe de Jeantaud impose de positionner les biellettes de direction 9_{G}, 9_{D} de façon à ce que ses axes longitudinaux (d_{9G}), (d_{9D}) se coupent sur le plan vertical passant sur l'axe (d₅) de l'essieu arrière 5, au milieu de l'essieu, pour un déplacement rectiligne du véhicule.

Certains véhicules, tels que les engins agricoles du type pulvérisateur ou engin enjambeur par exemple, sont des véhicules dits « à voie variable », c'est-à-dire que la distance entre deux roues d'un même essieu est variable entre une position élargie, permettant par exemple d'offrir une très bonne stabilité sur la terre lorsque le véhicule est utilisé à des fins de traitement de la terre par exemple, et une position rétractée, permettant notamment au véhicule de s'adapter aux largeurs de l'ensemble des voies de la voirie.

De façon connue, le passage de l'une à l'autre des positions est généralement réalisé lorsque le véhicule est sur le terrain à traiter. Pour cela, le véhicule est généralement muni d'un dispositif hydraulique adapté pour actionner au moins un vérin dont le point d'attache est solidaire du châssis de l'engin, et dont l'extrémité de la tige mobile est solidaire d'un essieu télescopique ou directement de la roue.

La figure 4 illustre l'épure de Jeantaud appliquée à l'engin 1 en position élargie, en situation de virage.

Pour une inclinaison des roues avant 3_{G}, 3_{D} identique à celle illustrée sur la figure 2 lorsque l'engin est en position rétractée, les roues avant gauche 3_{G} et avant droite 3_{D} ont chacune un centre de rotation CIR_{3G}, CIR_{3D} distincts l'un de l'autre lorsque les droites (d_{D}) et (d_{G}) coupent l'axe (d₅) de l'essieu arrière 5.

Il en résulte un phénomène de ripage dont les inconvénients ont été précédemment décrits.

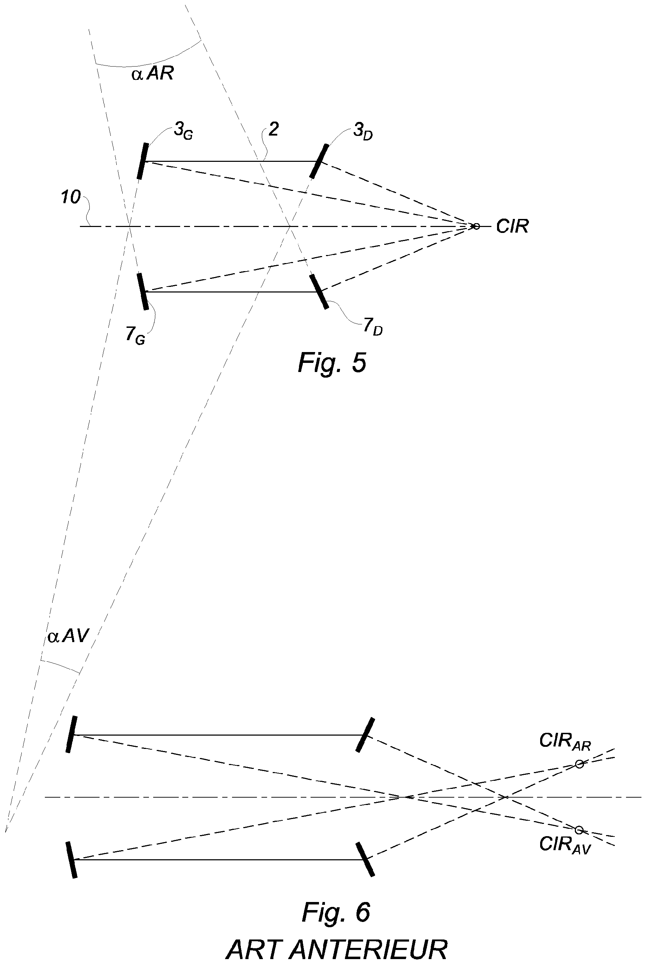

On représente maintenant sur la figure 5 l'épure de Jeantaud appliquée à un engin à quatre roues directrices, en situation de virage.

Un engin à quatre roues directrices permet un braquage largement supérieur à celui obtenu avec un engin à deux roues directrices. Cette disposition est particulièrement avantageuse pour les engins de type agricole pour réaliser des virages relativement serrés, par exemple en bout de champ.

En situation de virage, le pivotement de la roue arrière gauche 7_{G}, respectivement de la roue arrière droite 7_{D}, correspond au symétrique de la position de la roue avant gauche 3_{G}, respectivement de la roue avant droite 3_{D}, par rapport au plan médian des essieux avant et arrière.

Comme précédemment, la condition de non glissement est respectée lorsque, en virage, les lignes de contact au sol des quatre roues sont tangentes au cercle défini par le virage. Autrement dit, la condition de non glissement est respectée lorsque les quatre roues ont un centre de rotation commun (CIR), correspondant à un angle α _{AV} et α _{AR} d'ouverture entre les roues suffisant.

Typiquement, lorsque les roues avant et arrières sont des roues directrices, l'angle α_{AV} d'ouverture entre les roues avant droite et gauche, et l'angle α_{AR} entre les roues arrière droite et gauche, sont suffisants lorsque chacun de ces angles est sensiblement égal à la moitié de l'angle α d'ouverture lorsque l'engin comprend seulement deux roues directrices.

Lorsque les roues avant et les roues arrière sont directrices, le centre de rotation commun se trouve sur le plan transverse médian 10 de l'engin.

On entend par « plan transverse médian » le plan perpendiculaire à l'axe médian de l'engin, c'est-à-dire à l'axe symbolisant la direction de déplacement de l'engin lors d'un déplacement rectiligne, et se trouvant sensiblement à équidistance de l'essieu avant 2 et de l'essieu arrière 5.

Ainsi, tel que représenté, pour un virage à droite, l'épure de Jeantaud définit que la condition de non glissement est respectée lorsque les droites perpendiculaires aux lignes de contact au sol des quatre roues directrices se coupent sur la ligne d'intersection au sol du plan transverse médian 10 du châssis.

Comme précédemment, dans le cas de d'un véhicule à voie variable tels que les engins agricoles du type pulvérisateur ou engin enjambeur par exemple, la distance entre deux roues d'un même essieu est variable entre une position élargie et une position rétractée.

La figure 6 illustre l'épure de Jeantaud appliquée à l'engin à quatre roues directrices, en position élargie et en situation de virage.

Pour un pivotement des roues 3_{G}, 3_{D}, 7_{G}, 7_{D}, identique à celui illustré sur la figure 5 lorsque l'engin est en position rétractée, chaque roue directrice possède un centre instantané de rotation qui lui est propre, et distinct du plan transverse médian 10, ce qui entraîne de la même façon que pour un engin à deux roues directrices un phénomène de ripage, générant les inconvénients précités.

Le document WO 2005/068278 A1 décrit un essieu directeur pour véhicules et notamment pour engins de travaux publics ou tracteurs agricoles.

La présente invention vise à pallier les inconvénients précités, et se rapporte à cet effet à un ensemble comprenant :
- un châssis pour engin terrestre mobile notamment agricole ou engin de travaux public ;
- au moins deux demi-traverses montées télescopiques sur le châssis entre une position rétractée et une position d'extension ;
- des supports de roues montés pivotants sur chacune desdites demi-traverses ;
- des roues directrices montées rotatives sur lesdits supports et reliées entre elles par un essieu ;
- un dispositif de pilotage de la direction des roues ;
ledit ensemble étant remarquable en ce qu'il comprend des moyens de nature électro-hydraulique conformés pour augmenter ou diminuer l'angle entre les roues d'un même essieu pour un certain pivotement desdites roues et pour une certaine position desdites demi-traverses, par rapport à l'angle obtenu entre lesdites roues, pour un même pivotement desdites roues et pour une autre position desdites demi- traverses, ladite augmentation ou diminution étant directement fonction de la distance entre les roues.

Ainsi, en prévoyant des moyens conformés, pour une certaine position des deux demi-traverses, pour augmenter ou diminuer l'ouverture relative des roues lorsqu'elles pivotent, par rapport à l'ouverture relative des roues obtenue pour un même pivotement et une autre position des deux demi- traverses, on déplace, lorsque les roues pivotent, le centre instantané de rotation vers la droite joignant les deux points de contact au sol des roues arrières lorsque le véhicule est à deux roues directrices. Pour un véhicule à quatre roues directrices, le centre instantané de rotation des quatre roues se trouve sensiblement aligné sur le plan transverse médian du châssis.

En déplaçant de la sorte le centre instantané de rotation, on se rapproche fortement de l'épure de Jeantaud quelle que soit la largeur de voie retenue de l'engin, ce qui permet de respecter au mieux la condition de non-glissement, et d'éviter des situations de ripage des roues.

Selon un premier mode de réalisation non couvert de l'invention, le dispositif de pilotage de la direction des roues comprend des vérins de direction interposés entre le châssis et les supports de roues et lesdits moyens conformés pour augmenter ou diminuer l'angle entre les roues d'un même essieu pour un certain pivotement desdites roues et pour une certaine position desdites demi-traverses, par rapport à l'angle obtenu entre lesdites roues, pour un même pivotement desdites roues, et pour une autre position desdites demi- traverses, ladite augmentation ou diminution étant directement fonction de la distance entre les roues, comprennent des moyens mécaniques pour déplacer le point d'attache de chaque vérin de direction lors d'une extension des demi- traverses par rapport au châssis.

Ainsi, en prévoyant des moyens mécaniques pour déplacer le point d'attache de chaque vérin de direction, conformés pour augmenter ou diminuer l'ouverture relative des roues lorsqu'elles pivotent, pour une position donnée des deux demi-traverses, par rapport à l'ouverture relative des roues obtenue lorsqu'elles pivotent, pour une autre position des deux demi-traverses, le déplacement du point d'attache de chaque vérin est réalisé de concert avec la modification de la largeur de voie de l'engin, ce qui permet de réduire le temps de passage d'une largeur de voie à une autre, tout en assurant le positionnement adéquat du vérin pour toute largeur de voie.

Selon d'autres caractéristiques toutes optionnelles propres au premier mode de réalisation non couvert de l'invention :
- le point d'attache de chaque vérin coopère avec au moins un système rampe/ glissière conformé pour contraindre le point d'attache de chaque vérin à se déplacer dans une glissière ;
- les moyens pour déplacer le point d'attache de chaque vérin comprennent d'une part au moins une platine montée sur une demi-traverse et comprenant ladite glissière conformée pour coopérer avec le point d'attache de chaque vérin, et d'autre part au moins une rampe montée sur un support de traverse solidaire du châssis, ladite rampe étant conformée pour contraindre le déplacement du point d'attache du vérin dans ladite glissière lors d'un déplacement desdites demi-traverses. En prévoyant de monter une platine sur une demi-traverse et une rampe sur le support de traverse pour réaliser les moyens pour déplacer le point d'attache de chaque vérin, le dispositif est simple de montage et peut s'adapter à tout engin terrestre mobile à voie variable connu de l'art antérieur ;
- au moins une desdites rampes s'étend sensiblement depuis une portion centrale du support de traverse vers une portion extrême dudit support ;
- la rampe est inclinée par rapport à un axe de déplacement des demi-traverses ;
- la glissière est conformée pour autoriser un mouvement de translation rotative et/ou linéaire du point d'attache du vérin ;
- la demi-traverse comprend des moyens d'agencement de l'inclinaison de la rampe par rapport à ladite demi-traverse ;

Selon un deuxième mode de réalisation de l'ensemble selon l'invention, les moyens conformés pour augmenter ou diminuer l'angle entre les roues d'un même essieu pour un certain pivotement desdites roues et pour une certaine position desdites demi-traverses, par rapport à l'angle obtenu entre lesdites roues, pour un même pivotement desdites roues et pour une autre position desdites demi-traverses, ladite augmentation ou diminution étant directement fonction de la distance entre les roues, comprennent au moins un dispositif électro-hydraulique.

Selon ce deuxième mode de réalisation, le dispositif de pilotage de la direction des roues comprend à nouveau des vérins de direction interposés entre le châssis et les supports de roues, et le dispositif électro-hydraulique comprend :
- des moyens d'acquisition de la position des roues et de la largeur de voie de l'engin ;
- au moins un superviseur comprenant au moins un calculateur relié auxdits moyens d'acquisition ;
- au moins un boîtier de régulation de la pression hydraulique introduite dans les vérins de direction.

Optionnellement, les moyens d'acquisition de la position des roues et de la largeur de voie de l'engin comprennent :
- au moins un capteur de direction adapté pour déterminer l'angle de pivotement d'au moins une roue ;
- au moins un capteur de voie adapté pour déterminer la largeur de voie de l'engin.

En outre, le boîtier de régulation de la pression hydraulique introduite dans les vérins de direction définit un circuit en boucle fermé avec un desdits vérins de direction.

Par ailleurs, le boîtier de régulation est relié à un dispositif de commande de direction de l'engin et est adapté pour piloter l'allongement desdits vérins.

Enfin, le boîtier de régulation comprend au moins un distributeur de commande électrique adapté pour permettre l'introduction d'un fluide de façon à augmenter ou réduire l'allongement des vérins de direction.

Selon une variante non couverte du deuxième mode de réalisation, les moyens conformés pour augmenter ou diminuer l'angle entre les roues d'un même essieu pour un certain pivotement desdites roues et pour une certaine position desdites demi-traverses, par rapport à l'angle obtenu entre lesdites roues, pour un même pivotement desdites roues et pour une autre position desdites demi-traverses, ladite augmentation ou diminution étant directement fonction de la distance entre les roues, comprennent au moins un dispositif électro-électrique.

La présente invention se rapporte également à un engin mobile terrestre à voie variable motorisé ou tracté tel qu'un engin agricole du type pulvérisateur ou engin enjambeur ou engin de travaux public à au moins deux roues directrices, remarquable en ce qu'il comprend au moins un ensemble selon l'invention.

D'autres caractéristiques, buts et avantages de la présente invention, apparaîtront à la lecture de la description détaillée qui va suivre, selon les modes de réalisation donnés à titre d'exemples non limitatifs, et en référence aux dessins annexés sur lesquels :
- les figures 1 à 6 se rapportent à un engin à voie variable selon l'art antérieur :
   ∘ la figure 1 représente schématiquement un engin à voie variable dans une position rétractée en déplacement rectiligne ;
   ∘ la figure 2 représente schématiquement le même engin en situation de virage, sur lequel on a tracé l'épure de Jeantaud ;
   ∘ la figure 3 est une représentation similaire à celle de la figure 1, sur laquelle on a tracé l'épure de Jeantaud ;
   ∘ la figure 4 représente en situation de virage l'engin à voie variable en position d'extension, sur lequel on a tracé l'épure de Jeantaud ;
   ∘ la figure 5 représente un engin à voie variable à quatre roues directrices en position rétractée et en situation de virage, sur lequel est représentée l'épure de Jeantaud ;
   ∘ la figure 6 est une représentation similaire à celle de la figure 5, l'engin étant configuré en position d'extension ;

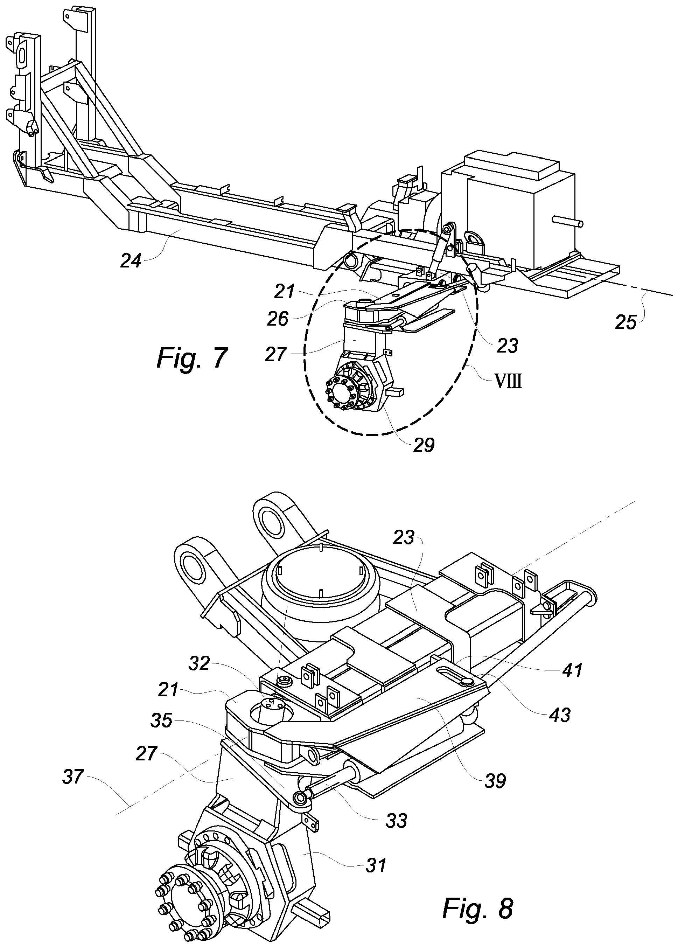

- la figure 7 illustre en vue simplifiée un châssis pour engin à voie variable équipé d'un ensemble selon un premier mode de réalisation non couvert de l'invention ;
- la figure 8 est une vue simplifiée agrandie de la zone VIII de la figure 7 ;

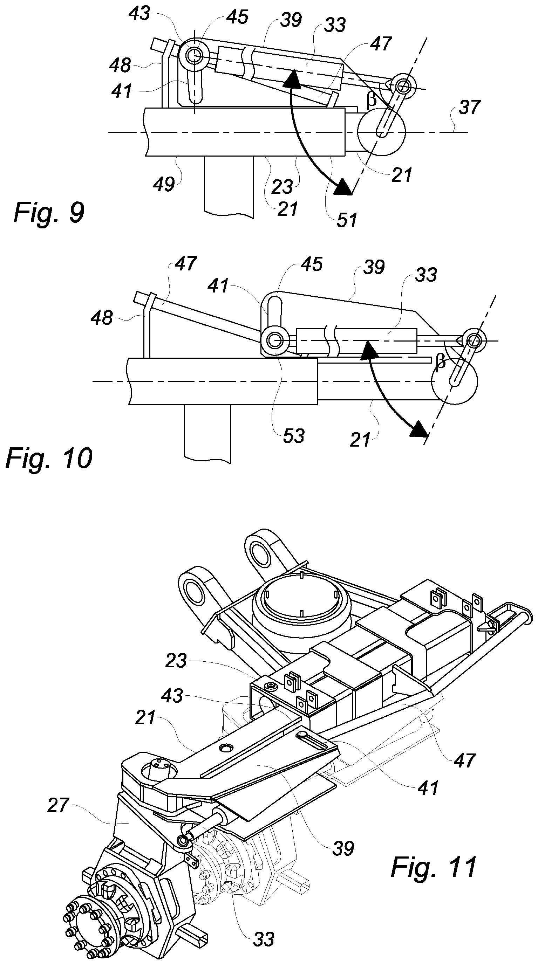

- la figure 9 représente schématiquement en vue de dessus une demi-traverse en position rétractée montée sur le support de traverse, pour un véhicule à deux roues directrices ;
- la figure 10 est une vue similaire à celle de la figure 9, la demi- traverse étant représentée en position d'extension ;
- la figure 11 est une vue simplifiée similaire à celle de la figure 8, la demi-traverse étant représentée en position d'extension ;

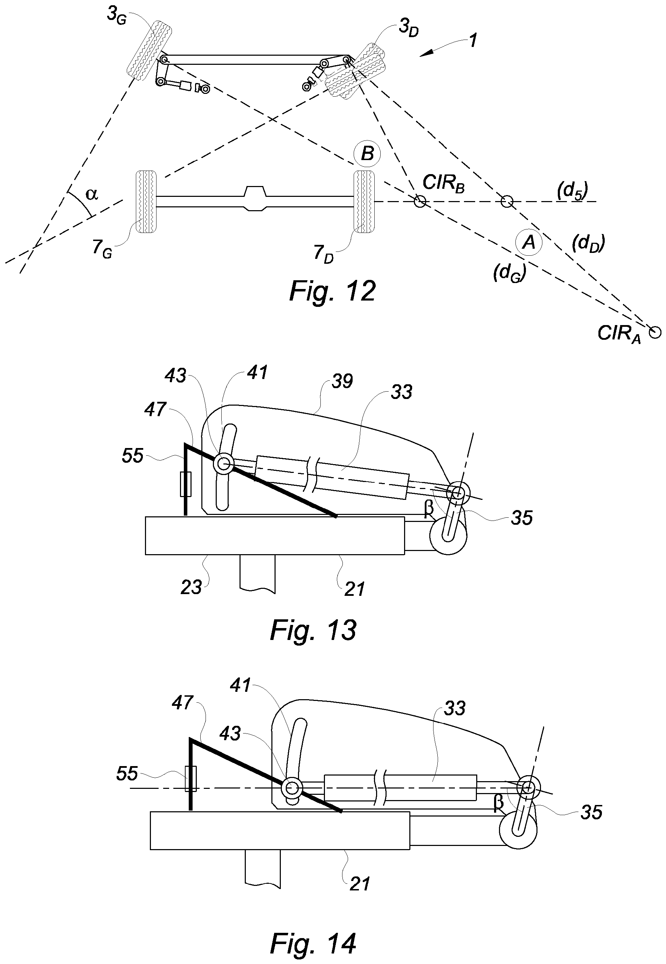

- la figure 12 représente schématiquement en situation de virage l'engin à voie variable à deux roues directrices en position d'extension, équipé d'un ensemble selon le premier mode de réalisation non couvert de l'invention, sur lequel est représentée la correction de braquage ;
- la figure 13 représente schématiquement en vue de dessus une demi-traverse en position rétractée montée sur le support de traverse, pour un véhicule à quatre roues directrices ;
- la figure 14 est une vue similaire à celle de la figure 13, la demi- traverse étant représentée en position d'extension ;

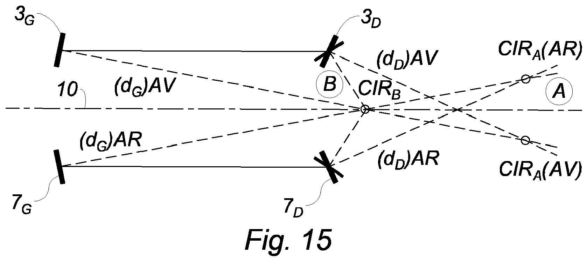

- la figure 15 est une vue similaire à celle de la figure 12, l'engin représenté étant un véhicule à quatre roues directrices ;

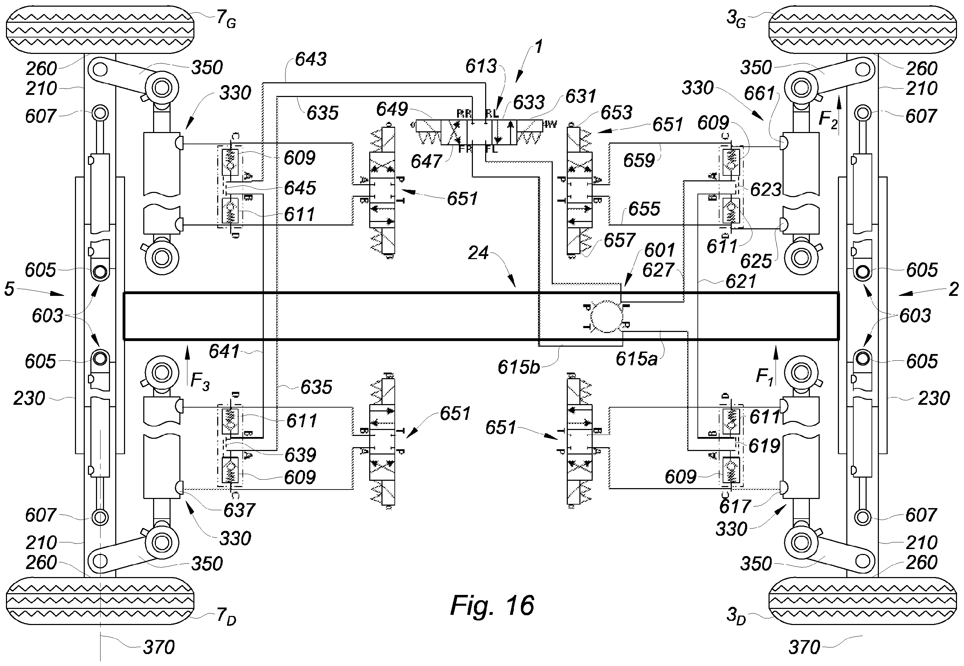

- la figure 16 représente schématiquement un véhicule à quatre roues directrices équipé d'un ensemble selon un deuxième mode de réalisation de l'invention.

Sur l'ensemble des figures, des références identiques ou analogues désignent des organes ou ensembles d'organes identiques ou analogues.

On se réfère à la figure 7, illustrant une demi-traverse 21 montée télescopique sur un support de traverse 23 solidaire d'un châssis 24.

Le support de traverse 23 est monté sur le châssis 24 tout en gardant ses libertés de suspension, le châssis 24 pouvant être un engin mobile terrestre (non représenté) par exemple agricole, du type pulvérisateur, engin enjambeur, engin de travaux public ou tout autre type.

Sur le support de traverse 23 sont montées deux demi-traverses (seule la demi-traverse destinée à supporter la roue avant droite est représentée de façon simplifiée), positionnées symétriquement l'une de l'autre par rapport à l'axe longitudinal 25 du châssis.

La partie extrême 26 de chaque demi-traverse 21 reçoit un support de roue 27 destiné à supporter une roue (non représentée) montée rotative sur l'arbre 29.

On se réfère à la figure 8 pour plus de visibilité, illustrant de façon simplifiée la demi-traverse 21 dans une position rétractée, montée sur le support de traverse 23.

Le support de roue 27 comprend un porte-fusée 31 monté pivotant autour d'un axe de pivotement 32, sensiblement vertical. Le pivotement du porte-fusée 31 est réalisé par l'intermédiaire d'un vérin de direction 33, dont l'extrémité de la tige est reliée à une biellette de direction 35 solidaire dudit porte-fusée.

Les vérins de direction constituent un dispositif de pilotage de la direction des roues. Bien évidemment, un tel dispositif peut être constitué par tout autre moyen connu de l'homme du métier.

Les vérins de direction 33 sont typiquement constitués par des vérins double effet, reliés à un dispositif de commande de direction (non représenté) classique comprenant une pompe hydraulique actionnée par la rotation du volant depuis la cabine de conduite et délivrant un fluide d'un côté ou de l'autre du piston du vérin, en fonction du sens de rotation du volant.

Chaque demi-traverse 21 est en outre mobile en translation par rapport au support de traverse le long d'un axe de déplacement 37. Le déplacement de chaque demi-traverse permet de faire passer alternativement l'engin entre une position « rétractée » et une position « d'extension ».

Lorsque l'engin est en position rétractée, la largeur de voie est, à titre d'exemple, environ égale à 1,8 mètres, et l'engin est particulièrement adapté pour rouler sur l'ensemble des voies de la voirie.

Dans une position d'extension, l'engin présente, à titre d'exemple, une largeur de voie d'environ égale à 3,2 mètres, augmentant alors la stabilité de l'engin sur les surfaces irrégulières telles que celles des champs pulvériser par exemple.

Le passage de l'une à l'autre de ces positions est de façon connue réalisé par l'intermédiaire de vérins comprenant un point d'attache solidaire du support de traverse et dont l'extrémité de chaque tige est reliée à chaque demi-traverse. En actionnant les vérins, les demi-traverses passent de leur position rétractée à leur position d'extension. Cet agencement est bien connu de l'homme du métier et ne sera donc pas décrit davantage dans la suite de la description.

Sur chacune des demi-traverses 21 est fixée une platine 39 sur laquelle s'inscrit une fente assimilable à une glissière 41, de profil sensiblement circulaire, dont les dimensions sont conformées pour recevoir un point d'attache 43 du vérin de direction 33.

On se réfère à présent à la figure 9, représentant schématiquement en vue de dessus le support de traverse 23 et la demi-traverse 21 en position rétractée, position correspondant à celle qui vient d'être illustrée.

Dans une telle position, le point d'attache 43 du vérin 33 est localisé en butée de l'extrémité avant 45 de la glissière 41.

Le support de traverse 23 reçoit une rampe 47 reliée audit support par un dispositif de maintien 48. La rampe 47 s'étend sensiblement depuis une portion centrale 49 dudit support située sensiblement au niveau de l'axe longitudinal du châssis (à gauche du support de traverse 23 sur la figure 9) vers une portion extrême 51 dudit support (à droite du support de traverse). En outre, la rampe 47 est inclinée par rapport à l'axe de déplacement 37 des demi- traverses, et est conformée pour autoriser un coulissement du point d'attache du vérin le long de ladite rampe.

L'agencement de la glissière 41, de la rampe 47 et du vérin de direction 33 est tel que lors d'un déplacement d'une position rétractée à une position d'extension représentée aux figures 10 et 11, la rampe 47 contraint le point d'attache 43 du vérin à se déplacer le long de la glissière 41, depuis l'extrémité avant 45 de ladite glissière jusqu'à une extrémité arrière 53 de la glissière.

La platine 39 et la rampe 47 constituent à cet effet des moyens pour déplacer le point d'attache de chaque vérin de direction lors d'une extension des demi-traverses par rapport au châssis.

Dans une telle position d'extension, l'angle β formé entre le vérin 33 et la biellette de direction 35 est réduit par rapport à l'angle β obtenu dans la position rétractée précédemment décrite et représentée figure 9.

En réduisant l'angle entre le vérin et la biellette de direction lorsque la largeur de voie est augmentée, c'est-à-dire en rapprochant le point d'attache 43 du vérin de la demi-traverse 21, sans modifier l'inclinaison de ladite biellette en situation de fonctionnement rectiligne, une même course de vérin entraîne une inclinaison plus importante de ladite biellette, par rapport à l'inclinaison de la biellette obtenue pour une même course de vérin pour une position rétractée.

Autrement dit, lorsque les roues pivotent en situation de virage, et pour une position d'extension des demi-traverses 21, l'angle α d'ouverture entre les roues directrices (visible figure 12), qui correspond à l'angle que forme les roues directrices en situation de virage, est sensiblement augmenté par rapport à l'ouverture relative desdites roues obtenue lorsque les roues pivotent, en position rétractée des demi-traverses.

Le fait de permettre une ouverture angulaire entre les roues, supérieure lorsque la largeur de voie se trouve augmentée, entraine un déplacement du point de Jeantaud sensiblement sur l'axe passant par les arbres des roues arrière, comme illustré sur la figure 12, représentant schématiquement un engin 1 en position d'extension, par exemple pour une largeur de voie de 3 mètres.

Sur cette figure a été tracée l'épure de Jeantaud A, obtenue sans dispositif de correction du point d'attache du vérin en fonction de la largeur de voie, et l'épure de Jeantaud B que l'on obtient avec les moyens pour déplacer le point d'attache des vérins, lorsque les roues directrices de l'engin pivotent vers la droite.

En se référant à l'épure A, le centre instantané de rotation CIR_{A}, intersection de la droite (d_{D}) perpendiculaire à la roue avant droite 3_{D} et passant par son centre avec la droite (d_{G}) perpendiculaire à la roue avant gauche 3_{G} et passant par son centre, se trouve en arrière de l'axe (d₅) passant par le centre des roues arrière 7_{G}, 7_{D}.

Selon l'épure B, obtenue grâce à l'ensemble, la roue avant droite a pivoté d'un angle supérieur par rapport à la roue avant droite de l'épure A, et ce pour une même course de vérin. En augmentant l'ouverture relative des roues directrices lorsque la largeur de voie augmente, le centre instantané de rotation CIR_{B} se retrouve aligné sur l'axe (d₅), ce qui permet de se rapprocher des conditions de non glissement et de limiter fortement le phénomène de ripage.

On se réfère à présent à la figure 13, illustrant schématiquement un mode de réalisation non couvert des moyens de déplacement du point d'attache du vérin lorsque le véhicule est équipé de moyens pour passer alternativement de deux à quatre roues motrices.

La figure 13 représente schématiquement en vue de dessus la demi-traverse 21 en position rétractée.

Le dispositif de maintien 48 (visible aux figures 9 et 10) entre le support de traverse 23 et la rampe 47 a été remplacée par un vérin 55, permettant de modifier l'inclinaison de ladite rampe lors d'un passage de deux à quatre roues directrices, réalisé classiquement depuis le poste de conduite.

En passant à quatre roues directrices, l'angle entre la rampe 47 et le support de traverse 23 a été réduit par rapport à l'angle formé pour une configuration « deux roues directrices », ce qui entraine un déplacement du point d'attache 43 du vérin 33 dans la glissière 41 supportée par la platine 39.

La glissière 41 est conformée, d'une part, pour déplacer le point d'attache 43 du vérin 33 vers la gauche de la demi-traverse 21, lors d'un passage de deux à quatre roues directrices, et d'autre part pour autoriser un mouvement de translation rotative du point d'attache 43 du vérin 33, lors d'un passage d'une position rétractée à une position d'extension de l'engin.

En prévoyant de déplacer le point d'attache du vérin vers la gauche de la demi-traverse, lors d'un passage de deux à quatre roues directrices, l'angle β entre la biellette de direction 35 et le vérin 33 est diminué, pour une même course de vérin, par rapport à l'angle prévu pour un véhicule à deux roues directrices.

Ainsi, pour un véhicule à quatre roues directrices, on augmente l'amplitude de pivotement de la biellette 35 pour une course de vérin 33 identique à celle prévue pour un engin à deux roues directrices.

Bien évidemment, le vérin 33 peut être remplacé par tout moyen permettant d'agencer l'inclinaison de la rampe par rapport à la demi-traverse connu de l'homme du métier, comme par exemple un système de tringlerie.

Comme précédemment, et comme illustré sur la figure 14 représentant schématiquement en vue de dessus la demi-traverse 21 en position d'extension, l'angle β formé entre le vérin 33 et la biellette de direction 35 est réduit par rapport à l'angle β obtenu dans la position rétractée précédemment décrite et représentée figure 13. En réduisant de la sorte cet angle, on rapproche le point d'attache 43 du vérin 33 de la demi-traverse 21 sans modifier l'inclinaison de la biellette 35 en situation de fonctionnement rectiligne. Ainsi, une même course de vérin entraîne une inclinaison plus importante de la biellette 35 lorsque l'engin est en position d'extension, par rapport à l'inclinaison obtenue pour une même course de vérin en position rétractée.

Autrement dit, lorsque les roues pivotent en situation de virage, et pour une position d'extension des demi-traverses 21, l'angle d'ouverture entre les roues directrices est sensiblement augmenté par rapport à l'ouverture relative desdites roues obtenue lorsque les roues pivotent, en position rétractée des demi-traverses.

On se réfère à présent à la figure 15 illustrant, comme pour la figure 12, l'épure de Jeantaud A obtenue sans dispositif de correction du point d'attache du vérin en fonction de la largeur de voie, et l'épure de Jeantaud B obtenue avec les moyens pour déplacer le point d'attache des vérins, lors d'un virage à droite, pour un véhicule à quatre roues directrices.

En se référant à l'épure A, le centre instantané de rotation CIR_{A}(AV), intersection de la droite (d_{D})_{AV} perpendiculaire à la roue avant droite 3_{D} et passant par son centre avec la droite (d_{G})_{AV} perpendiculaire à la roue avant gauche 3_{G} et passant par son centre, se trouve en arrière de l'axe transverse médian 10 de l'engin, tandis que le centre instantané de rotation CIR_{A}(AR), intersection de la droite (d_{D})_{AR} perpendiculaire à la roue arrière droite 7_{D} et passant par son centre avec la droite (d_{G})_{AR} perpendiculaire à la roue arrière gauche 7_{G} et passant par son centre, se trouve en avant de l'axe transverse médian 10 de l'engin.

Selon l'épure B, obtenue grâce à l'ensemble, la roue avant droite 3_{D} a pivoté d'un angle supérieur par rapport à la roue avant droite de l'épure A, et ce pour une même course de vérin. De même, la roue arrière droite 7_{D} a également pivoté d'un angle supérieur par rapport à la roue arrière droite de l'épure A.

En augmentant l'ouverture relative des roues directrices, correspondant à une augmentation des angles α_{AV} et α_{AR} lorsque la largeur de voie augmente, le centre instantané de rotation CIR_{B} des quatre roues directrices se trouve sensiblement aligné sur l'axe transverse médian 10, ce qui permet de se rapprocher des conditions de non glissement et de limiter fortement le phénomène de ripage.

On se réfère à présent à la figure 16, illustrant schématiquement un engin à quatre roues directrices équipé d'un ensemble selon un deuxième mode de réalisation de l'invention.

Comme précédemment, l'engin 1 comprend un essieu avant 2 aux extrémités duquel sont montées deux roues avant 3_{G}, 3_{D} directrices et un essieu arrière 5 aux extrémités duquel sont montées deux roues arrière 7_{G}, 7_{D}, directrices ou non.

Bien sûr, les roues avant peuvent être également non-directrices et, dans ce cas, uniquement les roues arrières sont directrices.

L'engin 1 comprend quatre demi-traverses 210 montées télescopiques sur des supports de traverse 230 solidaires du châssis 24 et positionnés au niveau de l'essieu avant 2 et de l'essieu arrière 5.

Comme précédemment, la partie extrême 260 de chaque demi-traverse 210 reçoit un support de roue (non représenté) comprenant un porte-fusée monté pivotant autour d'un axe de pivotement sensiblement vertical, le pivotement du porte-fusée étant réalisé par l'intermédiaire de vérins de direction 330, dont l'extrémité de la tige est reliée à une biellette de direction 350 solidaire du porte-fusée.

Les vérins de direction 330, typiquement constitués par des vérins double effet, sont reliés à un dispositif de commande de direction 601 classique de type « Orbitrol », comprenant une pompe hydraulique P actionnée par la rotation du volant depuis la cabine de conduite et délivrant un fluide d'un côté ou de l'autre du piston du vérin, en fonction du sens de rotation du volant, et un réservoir T de retour de fluide.

Chaque demi-traverse 210 est en outre mobile en translation par rapport au support de traverse le long d'un axe de déplacement 370. Le déplacement de chaque demi-traverse permet de faire passer alternativement l'engin entre une position « rétractée » et une position « d'extension ».

Le passage de l'une à l'autre de ces positions est de façon connue réalisé par l'intermédiaire de vérins de voie 603 comprenant un point d'attache 605 solidaire du support de traverse 230 et dont l'extrémité 607 de chaque tige est reliée à chaque demi-traverse 210. De façon connue, en actionnant les vérins, les demi-traverses passent de leur position rétractée à leur position d'extension.

Le dispositif de commande de direction 601 commande la rotation des roues directrices en introduisant du fluide sous pression dans les vérins de direction 330. Pour cela, chaque vérin de direction est relié à deux clapets antiretour 609, 611.

Les roues avant 3_{D} et 3_{G} sont directrices et les roues arrières 7_{D} et 7_{G} sont rendues directrices ou non par l'intermédiaire d'un jeu de vannes tiroirs 613.

A titre d'exemple, pour effectuer un virage à droite, le dispositif de commande de direction 601 envoie un fluide sous pression dans un conduit 615a et dans un conduit 615b. Le fluide traverse le clapet anti-retour 609 puis pénètre dans l'orifice 617 du vérin de direction 330 relié à la roue avant droite, ce qui entraîne un déplacement de la tige du vérin dans la direction de la flèche F1, entraînant de concert le pivotement de la biellette de direction 350 dans le sens horaire et la rotation de la roue avant droite 3_{D} vers la droite.

En fait, lorsque le fluide arrive au niveau du clapet anti-retour 609, un volume de ce fluide sous pression traverse le pont 619, ce qui déverrouille le clapet anti-retour 611 permettant au fluide sortant du vérin 330 de s'écouler dans un conduit 621 jusqu'à atteindre le clapet anti-retour 611 relié au vérin de direction 330 de la roue avant gauche. Un certain volume de fluide sous pression pénètre dans le clapet anti-retour 611 et un certain volume de fluide traverse le pont 623.

Le volume de fluide qui pénètre dans le clapet anti-retour 611 entre dans l'orifice 625 du vérin de direction 330 relié à la roue avant gauche 3_{G}, entraînant le déplacement de la tige du vérin dans la direction telle que représentée par la flèche F2. Un tel déplacement de la tige de vérin entraîne le pivotement de la biellette de direction 350 correspondante, et de concert la rotation de la roue avant gauche 3_{G} vers la droite.

Le volume de fluide qui a traversé le pont 623 déverrouille le clapet anti-retour 609 permettant au fluide sortant du vérin 330 gauche de s'écouler vers le réservoir T du dispositif de commande de direction 601, via le conduit 627, de sorte que le circuit hydraulique est un circuit en boucle fermée.

Le conduit 615b est quant à lui relié aux vannes tiroir 613. Les vannes 613 sont commandées électroniquement (ou électriquement) de façon à permettre trois modes de direction de l'engin : deux roues avant directrices, quatre roues directrices en marche « crabe » (roues dans la même direction en situation de virage), quatre roues directrices en marche « coordonnée » (les deux roues directrices arrière tournent dans le sens inverse des roues directrices avant en situation de virage).

Pour un déplacement de l'engin en mode quatre roues directrices en marche coordonnée, un signal est envoyé depuis la cabine du conducteur à un distributeur de commande électrique 631 activant la vanne 633. Le fluide qui se déplace dans le conduit 615b lors de la commande de déplacement de l'engin vers la droite traverse alors la vanne 633 et circule dans un conduit 635 alimentant le vérin de direction 330 de la roue arrière droite 7_{D} par l'intermédiaire d'un clapet anti-retour 609.

Le fluide pénètre dans l'orifice 637 du vérin 330, déplaçant la tige du vérin dans la direction de la flèche F3, ce qui entraîne le pivotement de la biellette de direction 350 de la roue arrière droite 7_{D} dans le sens anti-horaire, et la rotation de ladite roue vers la gauche.

La roue arrière gauche 7_{G} est également tournée vers la gauche grâce à l'action du fluide sous pression qui traverse le pont 639 déverrouillant ainsi le clapet anti-retour 611 et permettant au fluide sortant du vérin 330 de s'écouler dans le conduit 641 alimentant le vérin de direction 330 de la roue arrière gauche, par l'intermédiaire du clapet anti-retour 611.

Le volume de fluide qui arrive par le conduit 641 est en fait partiellement envoyé dans le clapet anti-retour 611. En traversant le pont 645, l'autre partie du volume de fluide déverrouille le clapet anti-retour 609 permettant au fluide sortant du vérin 330 de retourner dans le réservoir T du dispositif de commande de direction 601. La description qui précède est relative à la marche coordonnée de l'engin en mode quatre roues directrices, c'est-à-dire que les roues avant et les roues arrière tournent en sens contraire lors d'un virage de l'engin.

Pour permettre un déplacement de l'engin en mode quatre roues motrices en marche « crabe », un signal électrique est envoyé au dispositif de commande électrique 649 afin de rendre la vanne 647 active, ce qui permet un déplacement du fluide depuis le conduit 615b vers le conduit 643 et l'introduction du fluide dans l'orifice correspondant du vérin de direction 330, entraînant une rotation de la roue arrière gauche vers la droite lors d'un virage à droite.

On passe d'un mode « quatre roues directrices » au mode « deux roues directrices » en rappelant les vannes 633 et 647 dans leur position d'origine. Dans une telle configuration, le fluide envoyé par le dispositif de commande de direction 601 dans le conduit droit ou gauche se retrouve bloqué au niveau des vannes tiroirs 613 et n'atteint pas les roues arrière.

Selon l'invention, l'ensemble comprend des moyens conformés, pour une certaine position des deux demi-traverses, pour augmenter ou diminuer l'ouverture relative des roues lorsqu'elles pivotent, par rapport à l'ouverture relative des roues obtenue pour un même pivotement et une autre position des deux demi-traverses.

Selon ce deuxième mode de réalisation de l'invention, ces moyens comprennent un dispositif électro-hydraulique.

Ces moyens comprennent des moyens électroniques qui commandent un boîtier de régulation 651 « BTAP » de la pression hydraulique introduite dans les vérins de direction.

Chaque vérin de direction est relié au boîtier de régulation 651, lui-même relié à la pompe P et au réservoir T du dispositif de commande de direction 601.

Le boîtier de régulation 651 est commandé par un superviseur numérique (non représenté) comprenant en outre au moins un calculateur.

L'ensemble du dispositif est équipé de moyens d'acquisition de la position des roues et de la largeur de voie de l'engin.

On entend par « moyens d'acquisition de la position des roues » tout dispositif adapté pour déterminer à un instant donné l'angle de pivotement d'une roue de l'engin. A cet effet, un tel dispositif peut être adapté pour relever la position de la roue, c'est-à-dire son angle de pivotement par rapport à une position de référence, ou pour relever la valeur de la course d'un vérin de direction solidaire de la biellette de direction d'une roue, afin d'en déduire l'angle de pivotement de la roue.

On entend par « moyens d'acquisition de la largeur de voie » tout dispositif adapté pour relever à un instant donné la largeur de voie que présente l'engin.

Plus précisément à titre d'exemple, le vérin de voie 603 est relié à un capteur de voie adapté pour connaître la largeur de voie de l'engin, tandis que le vérin de direction 330 est relié à un capteur de direction adapté pour relever la position de la roue. Le capteur de position relève soit l'angle de rotation de la roue soit la distance parcourue par la tige du vérin de direction 330.

Le superviseur numérique définit la correction angulaire nécessaire à apporter à l'une ou à plusieurs des roues directrices afin de se rapprocher de l'épure de Jeantaud.

Le calculateur numérique du superviseur envoie ensuite un ordre au boîtier de régulation 651 de façon à commander l'introduction d'un fluide dans l'un ou l'autre des deux orifices du vérin de direction 330 afin d'augmenter ou de réduire la course de la tige du vérin et en conséquence d'agir sur l'angle de rotation d'une roue.

Pour cela, pour une largeur de voie donnée et pour un angle de la roue dite « maîtresse » donné, la roue dite « pilotée » doit présenter un certain angle de rotation pour respecter l'épure de Jeantaud.

Dans l'exemple d'un virage à droite avec l'engin en position quatre roues directrices en marche coordonnée, le fluide est envoyé dans les vérins de direction 330 qui actionnent la roue avant droite 3_{D} et la roue arrière droite 7_{D} comme expliqué précédemment dans la description.

Le calculateur numérique du superviseur reçoit les informations de capteurs de voie et de direction. Le calculateur compare les valeurs de l'angle de chaque roue « maîtresse » (respectivement la roue avant droite et la roue arrière droite dans l'exemple) et de l'angle de chaque roue « pilotée » (respectivement la roue avant gauche et la roue arrière gauche dans l'exemple) avec les valeurs théoriques de l'angle attendu pour les roues avant gauche et arrière gauche, pour une largeur de voie donnée.

Pour cela, le calculateur dispose d'abaques renseignant, pour une largeur de voie et pour un angle de la roue maîtresse, l'angle de rotation que la roue pilotée doit présenter afin de se rapprocher au plus près de l'épure de Jeantaud.

Dans le cas où une augmentation de l'angle de la roue avant gauche (roue pilotée), par exemple, serait nécessaire pour se rapprocher de l'épure de Jeantaud, cas de figure envisagé lorsque l'on passe d'une position d'extension des deux demi-traverses vers une position rétractée des deux demi-traverses, le superviseur commande le boîtier de régulation 651 relié à la roue avant gauche 3_{G}. Un signal électrique est alors envoyé au distributeur de commande électrique 653 entraînant une introduction du fluide dans la voie B au travers du conduit 655 relié à l'orifice 625 du vérin de direction 330 de la roue avant gauche, permettant un allongement de la course du vérin, et ainsi une augmentation de l'angle de rotation de la roue par rapport à celui initialement obtenu pour une largeur de voie supérieure.

Dans le cas où une réduction de l'angle de la roue avant gauche serait nécessaire pour se rapprocher de l'épure de Jeantaud, cas de figure envisagé lorsque l'on passe d'une position rétractée des deux demi-traverses vers une position d'extension des deux demi-traverses, le superviseur commande le boîtier de régulation 651 relié à la roue avant gauche 3_{G} et un signal électrique est envoyé au distributeur de commande électrique 657 entraînant une introduction du fluide dans la voie A au travers du conduit 659 relié à l'orifice 661 du vérin de direction 330 de la roue avant gauche, permettant une réduction de la course du vérin, et ainsi une diminution de l'angle de rotation de la roue par rapport à celui initialement obtenu pour une largeur de voie inférieure.

Le boîtier de régulation 651 forme avec le vérin de direction 330 un circuit en boucle fermée, c'est-à-dire qu'un premier orifice du vérin reçoit le fluide sous pression grâce à la pompe P du dispositif de commande de direction 601 à laquelle le boîtier de régulation est relié, et un deuxième orifice du vérin de direction est relié audit boîtier de régulation également relié au réservoir T du dispositif de commande de direction, afin d'évacuer le fluide introduit dans le vérin.

La description qui précède fait référence à un dispositif de type électro-hydraulique. Bien sûr, selon des modes de réalisation non couverts de l'invention, ce dispositif peut être remplacé par un dispositif de type électro-pneumatique, ou encore électro-électrique. A titre d'exemple, dans le cas d'un dispositif de type électro-électrique, les vérins de direction et/ou de voie dont fait référence la présente description sont réalisés par des vérins électriques.

Grâce à la présente invention, on reste proche de l'épure de Jeantaud quelle que soit la largeur de voie retenue. En outre, le respect de l'épure de Jeantaud est réalisé grâce à un dispositif facile à monter sur tout type d'engin terrestre mobile à voie variable à deux ou à quatre roues directrices.

Selon le premier mode de réalisation non couvert de l'invention, le déplacement des demi-traverses alternativement entre une position rétractée et une position d'extension entraîne mécaniquement, simultanément et instantanément le déplacement du point d'attache des vérins, ce qui supprime l'étape préalable de réglage de l'inclinaison des biellettes.

Selon le deuxième mode de réalisation de l'invention, on se rapproche de l'épure de Jeantaud quelle que soit la largeur de voie appliquée à l'engin, grâce à un dispositif hydraulique piloté électroniquement. En variante non couverte, ce dispositif peut être pneumatique ou électrique.

Comme il va de soi, l'invention ne se limite pas aux seules formes de réalisation de cet ensemble, décrites ci-dessus uniquement à titre d'exemples illustratifs, mais elle embrasse au contraire toutes les variantes. A cet effet, par exemple, l'ensemble précédemment décrit en référence au premier mode de réalisation non couvert de l'invention peut avantageusement être couplé avec un dispositif d'asservissement électronique, permettant ainsi d'augmenter la précision du positionnement du point d'attache du vérin dans la glissière.

## Revendications

1. Ensemble comprenant :
- un châssis (24) pour engin terrestre mobile notamment agricole ou engin de travaux public ;
- au moins deux demi-traverses (21, 210) montées télescopiques sur le châssis entre une position rétractée et une position d'extension ;
- des supports de roues (27) montés pivotants sur chacune desdites demi-traverses ;
- des roues directrices montées rotatives sur lesdits supports et reliées entre elles par un essieu ;
- un dispositif de pilotage de la direction des roues ;
ledit ensemble étant **caractérisé en ce qu'**il comprend des moyens de nature électro-hydraulique conformés pour augmenter ou diminuer l'angle entre les roues d'un même essieu pour un certain pivotement desdites roues et pour une certaine position desdites demi- traverses, par rapport à l'angle obtenu entre lesdites roues, pour un même pivotement desdites roues et pour une autre position desdites demi-traverses, ladite augmentation ou diminution étant directement fonction de la distance entre les roues.

2. Ensemble selon la revendication 1, **caractérisé en ce que** les moyens conformés pour augmenter ou diminuer l'angle entre les roues d'un même essieu pour un certain pivotement desdites roues et pour une certaine position desdites demi-traverses, par rapport à l'angle obtenu entre lesdites roues, pour un même pivotement desdites roues et pour une autre position desdites demi-traverses, ladite augmentation ou diminution étant directement fonction de la distance entre les roues, comprennent au moins un dispositif électro-hydraulique.

3. Ensemble selon la revendication 2, dans lequel le dispositif de pilotage de la direction des roues comprend des vérins de direction (330) interposés entre le châssis (24) et les supports de roues (27), **caractérisé en ce que** le dispositif électro-hydraulique comprend :
- des moyens d'acquisition de la position des roues et de la largeur de voie de l'engin ;
- au moins un superviseur comprenant au moins un calculateur relié auxdits moyens d'acquisition ;
- au moins un boîtier de régulation (651) de la pression hydraulique introduite dans les vérins de direction (330).

4. Ensemble selon la revendication 3, **caractérisé en ce que** les moyens d'acquisition de la position des roues et de la largeur de voie de l'engin comprennent
- au moins un capteur de direction adapté pour déterminer l'angle de pivotement d'au moins une roue ;
- au moins un capteur de voie adapté pour déterminer la largeur de voie de l'engin.

5. Ensemble selon l'une des revendications 3 ou 4, **caractérisé en ce que** le boîtier de régulation (651) de la pression hydraulique introduite dans les vérins de direction (330) définit un circuit en boucle fermé avec un desdits vérins de direction (330).

6. Ensemble selon l'une quelconque des revendications 3 à 5, **caractérisé en ce que** le boîtier de régulation (651) est relié à un dispositif de commande de direction (601) de l'engin et est adapté pour piloter l'allongement desdits vérins.

7. Ensemble selon l'une quelconque des revendications 3 à 6, **caractérisé en ce que** le boîtier de régulation (651) comprend au moins un distributeur de commande électrique (653, 657) adapté pour permettre l'introduction d'un fluide de façon à augmenter ou réduire l'allongement des vérins de direction (330).

8. Engin mobile terrestre à voie variable motorisé ou tracté tel qu'un engin agricole du type pulvérisateur ou engin enjambeur à au moins deux roues directrices, **caractérisé en ce qu'**il comprend au moins un ensemble selon l'une quelconque des revendications 1 à 7.

## Patentansprüche

1. Anordnung, die Folgendes beinhaltet:
- ein Fahrgestell (24) für ein mobiles, insbesondere landwirtschaftliches Landfahrzeug oder ein Arbeitsfahrzeug;
- mindestens zwei Halbquerträger (21, 210), die an dem Fahrgestell zwischen einer eingefahrenen Position und einer ausgefahrenen Position teleskopisch angebracht sind;
- Radträger (27), die an jedem der Halbquerträger schwenkbar angebracht sind;
- gelenkte Räder, die an den Trägern drehbar angebracht sind und untereinander durch eine Achse verbunden sind;
- eine Vorrichtung zur Ansteuerung der Lenkung der Räder;
wobei die Anordnung **dadurch gekennzeichnet ist, dass** sie Mittel einer elektrohydraulischen Art beinhaltet, die dazu angepasst sind, den Winkel zwischen den Rädern einer gleichen Achse für eine gewisse Schwenkung der Räder und für eine gewisse Position der Halbquerträger mit Bezug auf den zwischen den Rädern für eine gleiche Schwenkung der Räder und für eine andere Position der Halbquerträger bestehenden Winkel zu vergrößern oder zu verkleinern, wobei die Vergrößerung oder Verkleinerung direkt von dem Abstand zwischen den Rädern abhängt.

2. Anordnung nach Anspruch 1, **dadurch gekennzeichnet, dass** die Mittel, die dazu angepasst sind, den Winkel zwischen den Rädern einer gleichen Achse für eine gewisse Schwenkung der Räder und für eine gewisse Position der Halbquerträger mit Bezug auf den zwischen den Rädern für eine gleiche Schwenkung der Räder und für eine andere Position der Halbquerträger bestehenden Winkel zu vergrößern oder zu verkleinern, wobei die Vergrößerung oder Verkleinerung direkt von dem Abstand zwischen den Rädern abhängt, mindestens eine elektrohydraulische Vorrichtung beinhalten.

3. Anordnung nach Anspruch 2, wobei die Vorrichtung zur Ansteuerung der Lenkung der Räder Lenkzylinder (330) beinhaltet, die zwischen dem Fahrgestell (24) und den Radträgern (27) eingefügt sind, **dadurch gekennzeichnet, dass** die elektrohydraulische Vorrichtung Folgendes beinhaltet:
- Mittel zum Erfassen der Position der Räder und der Spurbreite des Fahrzeugs;
- mindestens eine Überwachungseinrichtung, die mindestens eine Rechenvorrichtung beinhaltet, die mit den Erfassungsmitteln verbunden ist;
- mindestens ein Gerät zur Regelung (651) des in die Lenkzylinder (330) eingespeisten Hydraulikdrucks.

4. Anordnung nach Anspruch 3, **dadurch gekennzeichnet, dass** die Mittel zum Erfassen der Position der Räder und der Spurbreite des Fahrzeugs Folgendes beinhalten:
- mindestens einen Lenksensor, der dazu angepasst ist, den Schwenkwinkel mindestens eines Rades zu bestimmen;
- mindestens einen Spursensor, der dazu angepasst ist, die Spurbreite des Fahrzeugs zu bestimmen.

5. Anordnung nach einem der Ansprüche 3 oder 4, **dadurch gekennzeichnet, dass** das Gerät zur Regelung (651) des in die Lenkzylinder (330) eingespeisten Hydraulikdrucks mit einem der Lenkzylinder (330) einen geschlossenen Regelkreis definiert.

6. Anordnung nach einem der Ansprüche 3 bis 5, **dadurch gekennzeichnet, dass** das Regelungsgerät (651) mit einer Lenksteuerungsvorrichtung (601) des Fahrzeugs verbunden ist und dazu angepasst ist, die Streckung der Zylinder anzusteuern.

7. Anordnung nach einem der Ansprüche 3 bis 6, **dadurch gekennzeichnet, dass** das Regelungsgerät (651) mindestens einen elektrisch gesteuerten Verteiler (653, 657) beinhaltet, der dazu angepasst ist, das Einspeisen eines Fluids so zu gestatten, dass die Streckung der Lenkzylinder (330) vergrößert oder verringert wird.

8. Mobiles Landfahrzeug mit variabler Spur, motorisiert oder gezogen, wie etwa ein landwirtschaftliches Fahrzeug vom Typ Sprüher oder ein Fahrzeug mit hoher Bodenfreiheit, mit mindestens zwei gelenkten Rädern, **dadurch gekennzeichnet, dass** es mindestens eine Anordnung nach einem der Ansprüche 1 bis 7 beinhaltet.

## Claims

1. Assembly comprising:
- a chassis (24) for a movable terrestrial vehicle, in particular an agricultural or a construction vehicle;
- at least two half-cross members (21, 210) telescopically mounted on the chassis between a retracted position and an extended position;
- wheels supports (27) pivotally mounted on each one of said half-cross members;
- steerable wheels rotatably mounted on said supports and connected to each other by an axle;
- a device for piloting the steering of the wheels;
said assembly being **characterized in that** it comprises electro-hydraulic means shaped so as to enlarge or reduce the angle between the wheels of the same axle for a certain pivoting of said wheels and for a certain position of said half-cross members, in comparison with the angle obtained between said wheels, for the same pivoting of said wheels and for another position of said half-cross members, said enlargement or reduction being directly dependent of the distance between the wheels.

2. Assembly according to claim 1, wherein the means shaped so as to enlarge or reduce the angle between the wheels of the same axle for a certain pivoting of said wheels and for a certain position of said half-cross members, in comparison with the angle obtained between said wheels, for the same pivoting of said wheels and for another position of said half-cross members, said enlargement or reduction being directly dependent of the distance between the wheels, comprise at least one electro-hydraulic device.

3. Assembly according to claim 2, wherein the device for piloting the steering of the wheels comprises steering cylinders (330) interposed between the chassis (24) and the wheels supports (27), **characterized in that** the electro-hydraulic device comprises:
- means for acquiring the position of the wheels and the track width of the vehicle;
- at least one supervisor comprising at least one calculator connected to said acquisition means;
- at least one regulating box (651) for regulating the hydraulic pressure introduced into the steering cylinders (330).

4. Assembly according to claim 3, wherein the means for acquiring the position of the wheels and the track width of the vehicle comprise:
- at least one steering sensor adapted for determining the pivot angle of at least one wheel;
- at least one track sensor adapted for determining the track width of the vehicle.

5. Assembly according to claim 3 or 4, wherein the regulating box (651) for regulating the hydraulic pressure introduced into the steering cylinders (330) defines a closed-loop circuit with one of said steering cylinders (330).

6. Assembly according to any claims 3 to 5, wherein the regulating box (651) is connected to a steering control device (601) of the vehicle and is adapted for piloting the extension of said cylinders.

7. Assembly according to any claims 3 to 6, wherein the regulating box (651) comprises at least one electrical control valve (653, 657) adapted for enabling the introduction of a fluid so as to increase or decrease the extension of the steering cylinders (330).

8. A self-propelled or trailed movable terrestrial variable-track vehicle such as a sprayer-type agricultural vehicle or a straddle vehicle with at least two steerable wheels, **characterized in that** it comprises at least one assembly according to claim 1 to 7.
